# EUROPEAN PATENT SPECIFICATION

(11) **EP 3 992 307 B1**
(45) Date of publication and mention of the grant of the patent: **07.05.2025**
(21) Application number: 21204683.3
(22) Date of filing: 26.10.2021
(51) Int. Cl.: C14B 17/14, B01D 29/01, B01D 46/00

(54) **SCRUBBER FILTER AND A METHOD FOR ITS USE**
WÄSCHERFILTER UND VERFAHREN ZU DESSEN VERWENDUNG
FILTRE D'ÉPURATEUR ET SON PROCÉDÉ D'UTILISATION

(30) Priority: 27.10.2020 IT 202000025465
(43) Date of publication of application: 04.05.2022
(73) Proprietor: GE.MA.TA. S.p.A., 36070 Trissino (VI) (IT)
(72) Inventor: MAITAN, Gianni, 36070 Trissino (VI) (IT)
(74) Representative: Piovesana, Paolo

(56) References cited:
- CN-A- 102 553 316
- CN-A- 110 643 752
- CN-U- 207 871 905
- CN-U- 209 393 009
- CN-U- 211 069 616

## Description

The present invention relates to an abatement filter and a method for its use.

In particular, the invention relates to an abatement filter for removing the solid particulate present in the air which comes out of the leather treatment chambers, and more particularly of the leather spray chambers.

It is known that in order to treat the leathers, and in particular to deposit one or more layers of paint on the relative surfaces, the leathers themselves are made to pass through a chamber, in which they are sprayed with the paints themselves. The paints are substantially nebulized by means of nozzles, until drops of micrometric or smaller dimensions are obtained, which largely adhere to the surface of the skin, creating the required layer. At the same time, part of the drops remain suspended in the air, forming a potentially harmful and/or toxic aerosol. These paints may contain polluting and/or toxic materials, and therefore cannot simply be dispersed into the environment but must be previously filtered.

In particular, depending on the country in which the production line is located, the air emitted by the same must comply with specific laws. In particular, in Italy the air must comply with Legislative Decree no. 152 of 3 April 2006 concerning environmental regulations.

Similarly, machinery that can release potentially harmful emissions into the environment must fall within the UNI EN ISO 16911-1: 2013 standard.

Filters are known which provide for aspirating and filtering the air present inside the environment where the leathers are sprayed with at least one chemical substance, for example in order to deposit on their surface a protective and/or decorative layer, for example a colored layer.

In particular, these filters are divided into two types: dry filters and water filters.

The water filters provide for the positioning of a plurality of nozzles configured to spray water or other liquids on the aerosol emerging from the spray chamber, in order to precipitate the liquid and/or solid suspension present in the aerosol.

However, said known filters are not fully satisfactory since the water which is sprayed must be further treated before it can be disposed of. Furthermore, this type of filtering is not sufficiently effective for suspensions smaller than 10 µm, and in particular it is almost completely ineffective for particles smaller than 5 µm.

Furthermore, dry filters, also known as labyrinth filters, are known, which provide for the aerosol to pass through a plurality of small-sized channels obtained in a filtering layer, so that the suspension is deposited on the surface of the channels themselves.

However, even said dry filters are not fully satisfactory as they easily saturate and need to be periodically replaced. This is particularly undesirable since in order to replace them it is necessary to interrupt the operation of the scrubber filter, and in some cases of the entire production line, if it is not possible to isolate it from the filter. Furthermore, the dry abatement filters are usually vertical and are raised above the ground, generally at a height of a few meters, thus making the removal operations complex. Furthermore, they are not effective in the filtration of small particles.

Blast chillers are also known which provide for the use of a filter element made of paper, fabric, or non-woven fabric (TNT), to be positioned along the aerosol path, generally in correspondence with the apex of the abatement filter, in order to at least partially trap the suspended particulates.

However, these filters are not fully satisfactory since, similarly to what happens in dry filters, they can become saturated and consequently lose effectiveness. This in particular translates into a reduction in the aerosol flow that can pass through and consequently be filtered.

Therefore it is necessary to periodically replace the filtering elements, but this, as already mentioned, involves the need to shut down the production line or at least to isolate the spray chamber, with the obvious undesirable consequences. Furthermore, the replacement of the filters is particularly complicated since the abatement filters usually have an accentuated vertical development, and therefore the filtering element may not be easily reachable by a user.

In order to overcome this drawback, solutions have already been proposed that provide for a pair of coils of a ribbon of the material of which the filtering element is made, positioned on the sides of the abatement filter, with the ribbon running along the vertical of the filter itself or horizontally according to the embodiment, so as to cover the outlet of the output channel. In this way, since the filtering element is substantially constituted by a continuous belt, it is possible to replace the filtering surface simply by sliding the belt without having to leave the exhaust of the abatement filter uncovered, so as not to have to turn off the production plant.

However, even this solution is not completely satisfactory as it requires the space on the sides of the abatement filter to house the coils, which can measure even more than one meter in diameter, and this is not always possible, since in factories usually the different processing stations are as close together as possible in order to reduce the space occupied by the production line. Furthermore, if the coils are positioned at ground level, it is necessary to protect them from dirt that can affect the filters before they are used.

It is possible to solve this problem by positioning the coils in an elevated position, but this entails a plurality of drawbacks; in particular, the coils are quite heavy and must be firmly secured to the Abatement filter. Furthermore, when it is necessary to replace them, it is necessary for the user to climb a ladder to remove them, with possible risks of falling, or in any case with strong risks for his safety.

CN 211 069 616 describes a scrubbing filter which is used for the aerosol produced by the leather coloring chambers and which is left in position during the whole operation of the apparatus.

The object of the invention is to propose an abatement filter and a method for its use which overcome the drawbacks of the known solutions.

Another purpose of the invention is to propose an abatement filter that allows emissions to be reduced within the law, and in particular the rules established by Legislative Decree No. 152 of 3 April 2006.

Another purpose of the invention is to propose a Abatement filter that is suitable for the UNI EN ISO 16911-1: 2013 standard.

Another object of the invention is to propose an abatement filter and a method which allow to continuously monitor the state of the filter.

Another object of the invention is to propose an abatement filter and a method that can be implemented in a production line.

Another object of the invention is to propose a scrubber filter which has reduced horizontal dimensions.

Another object of the invention is to propose an abatement filter which does not require additional space for the filtering elements and/or for their replacement.

Another object of the invention is to propose an abatement filter and a method which allow to reduce the frequency with which it is necessary to replace the filtering element.

Another object of the invention is to propose a scrubber filter which allows to reduce the consumption of water.

Another object of the invention is to propose an abatement filter which is highly automated.

Another object of the invention is to propose an abatement filter and a method which are simple and quick to implement.

Another purpose of the invention is to propose an abatement filter and a method that allow to perform an effective filtration of the outgoing air, and in particular that allows to reduce the quantity of particulate present in the air below 3mg/m³· h.

Another object of the invention is to propose an abatement filter which is effective in the filtration of particulate matter with dimensions lower than 10 µm.

All these objects, whether considered alone or in any combination thereof, and others which will emerge from the following description are achieved according to the invention with a device as defined in claim 1, a production line as defined in claim 13, and with a method as defined in claims 14 or 15.

The present invention is further clarified hereinafter in some of its preferred embodiments, given purely by way of non-limiting example with reference to the attached drawings, in which:

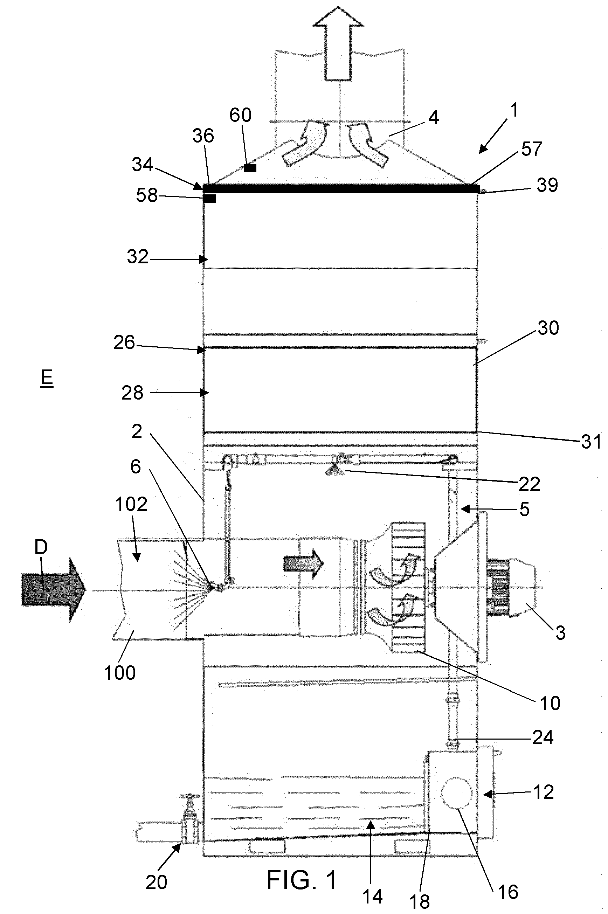

- Figure 1: shows in vertical section a scrubber filter according to the invention with the filtering element in operative position,

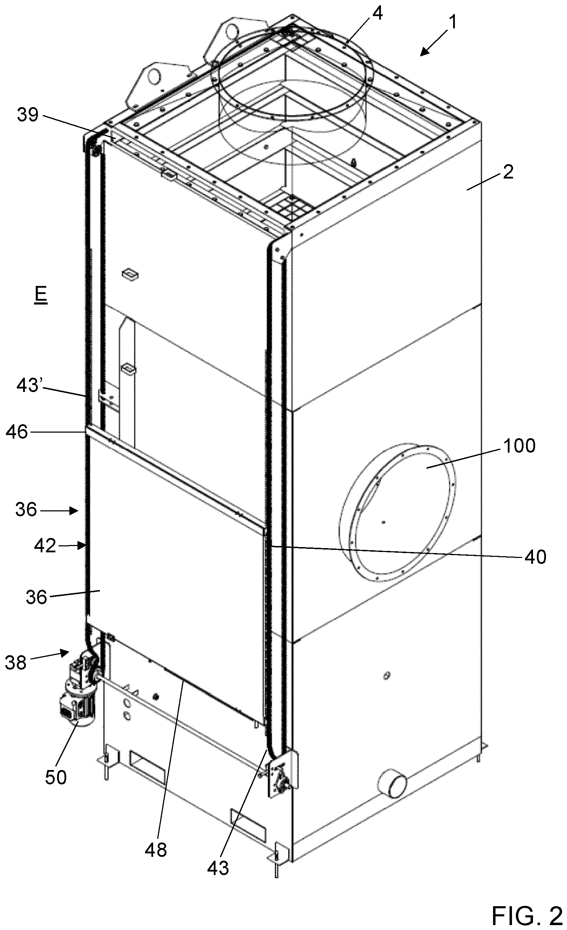

- Figure 2: shows it in perspective view in a first embodiment without the upper cover and with the filtering element in operative position, and

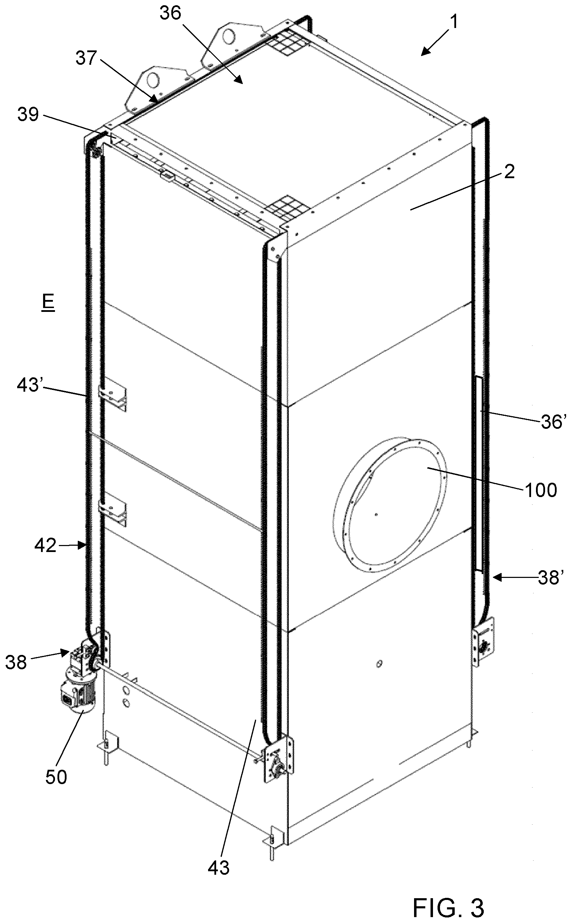

- Figure 3: shows it in perspective view in a second embodiment with the top cover rendered transparent, with a filter element in the operative position and with a further filter element in a third position.

The abatement filter 1 according to the invention can be integrated into a leather processing line, and preferably it can be positioned in the vicinity of a leather treatment chamber, and in particular in the vicinity of a chamber, in which the leathers are sprayed at least a liquid substance, in order to achieve a suitable surface treatment. This in particular generates an aerosol 102 comprising a solid and/or liquid particulate in suspension in the air, which must be filtered before the air can be introduced into the environment outside the production line.

The spraying chamber (not shown) is connected to the abatement filter 1 by means of an inlet duct 100. In particular, the inlet duct 100 is configured to allow the passage of the aerosol 102, in particular in a direction D. The inlet duct 100 ends inside a container 2 which substantially defines the abatement filter 1. Advantageously, in the operating condition, the container 2 can be substantially closed and isolated from the outside except for the inlet duct 100 and an outlet duct 4, as will become clear later. Conveniently, the inlet duct 100 can represent the passage used by most, and preferably by all, the aerosol 102 to pass from the spray chamber to the external environment E.

As can clearly be seen from the figures, the container 2 has a substantially vertical development, at the in order to limit the horizontal dimensions inside the production line in which it is inserted.

Advantageously, the leathers are never inside the container 2.

Advantageously, the container 2 can be external and separate from the processing line along which the leathers pass.

The inlet duct 100 can be fluidically connected to a suction device configured to generate a flow of fluids, and in particular of aerosols 102, from the spray chamber towards the inside of the container 2 and subsequently towards the outlet duct 4. Preferably said suction device can be positioned inside the container 2, or, alternatively, it can be positioned outside the container 2 but be fluidically connected with it.

In particular, the suction device can be constituted by a centrifugal impeller 10, driven by a motor 3.

Advantageously, the outlet duct 4 can have a substantially smaller section than that of the container 2, in order to facilitate the exit of said aerosol. 102 from the container itself.

The abatement filter comprises a liquid filter, indicated as a whole with the number 5.

In one embodiment, the liquid filter 5 comprises at least a first nozzle 6 positioned inside the inlet duct 100 configured to spray a first liquid on said aerosol 102, so as to achieve a first abatement of the particulate present in suspension. Advantageously, the first nozzle 6 can be positioned in equi-flow or counter-flow with respect to the aerosol flow 102 inside the inlet duct 100 in order to improve its filtering efficiency. Alternatively, the first nozzle 6 can be in equi-flow if the nozzle has a small diameter, so as to limit its clogging.

Preferably, the first liquid sprayed by the first nozzle 6 can be water.

In one embodiment, a plurality of first nozzles 6 can be present, which can be positioned, according to the direction of advance of the aerosol, substantially in sequence, or substantially in parallel.

Advantageously, a fan 10 configured to direct the aerosol flow 102 upwards can be present at and/or near the end of the inlet duct 100 which leads into the container 1. Preferably the fan 10 is of the radial type.

Conveniently, at its internal end, the inlet duct 100 has an opening which allows the aerosol 102 to diffuse inside the container 2, thanks to the action of the fan 10, and also allows the solid and/or liquid particulate to fall down.

In one embodiment, in the lower position, and preferably on the bottom of the container 2, there is a water recovery system, indicated as a whole with the number 12.

The water recovery system 12 comprises a sludge deposit basin 14, in which the solid and/or liquid particulate that falls from the inlet duct 100 is deposited.

In said basin 14 there is a pump 16 configured to pump the water present inside the basin itself towards the nozzles that make up the liquid filter 5 present in the abatement filter 1, and in particular the first nozzle 6, or other nozzles, as will become clearer hereinafter.

In a preferred embodiment, a suitable filter 18 can be provided on the suction side of said pump 16, configured to block the solid components from the outside, in order to prevent clogging of the nozzles.

Furthermore, the scrubber filter 1 can comprise a suitable sludge recovery and/or disposal system 20.

In one embodiment, the liquid filter 5 can comprise at least a second nozzle 22, and preferably a plurality of second nozzles 22, positioned in position higher than the end of said inlet duct 100 and configured to spray a fluid, preferably said first liquid, and more preferably water, in counter-flow with respect to the direction of advance of said aerosol 102. In one embodiment, said second nozzles 22 can be fed by said water recovery system 12, for example by means of a conduit 24, which starts from said pump 16, and which preferably can be the same conduit that also feeds the first nozzle 6.

Advantageously, the inlet duct 100 it can occupy only a part of the section of the container 2, so as to allow the fluid sprayed by said second uge IIi to fall and be collected in said basin 14.

The abatement filter 1 comprises a dry filter, indicated as a whole with the number 26. In particular, the dry filter is configured to allow the passage of the aerosol 102 through a plurality of small passages in order to allow the solid and/or liquid particulate to be deposited.

The dry filter 26 is arranged downstream from the liquid filter 5 with respect to the forward motion of the aerosol 102 inside the abatement filter 1.

In one embodiment, the dry filter 26 can comprise at least one body filter filling body 28, configured to perform a first dry filtration of the aerosol 102. Advantageously, the filling body filter 28 can comprise a layer of filling bodies 30, for example balls or complex objects with curved and/or flat surfaces, preferably made of plastic material with a rough surface, which trap the solid particles that are suspended in the aerosol 102. Conveniently, said filling bodies 30 can be contained inside a suitable casing 31. Advantageously, said dry filter 26 can be provided with one or more third nozzles (not shown), which allow to wash the filling bodies 30, in order to remove the particles and solids deposited on their surface.

In one embodiment, the dry filter 26 can comprise, downstream of said filler bodies 30 filter 28, one or more labyrinth filters 32, configured to pass the aerosol 102 through a plurality of narrow passages, in order to to cause condensation of the liquid and/or solid suspension present in said aerosol on the walls of the passages of the filter 32. Preferably these labyrinth filters 32 can be made of metal sheet.

The outlet duct 4 can be placed downstream of said labyrinth filters 32 and can have a smaller section than the rest of the container 2, in order to improve the upward flow of aerosol 102.

In a preferred embodiment, upstream of said outlet duct 4 there is a filtering apparatus 34, configured to filter the aerosol 102 destined to exit the abatement filter 1 through said outlet duct 4.

The filtering apparatus 34 comprises at least one laminar filter element 36, having laminar shape - ie in which two dimensions, i.e. length and width, are much greater than the thickness, i.e. the dimension which is substantially transverse to the direction of the aerosol flow 102 - made in flexible filter material, for example in fabric, or in TNT, preferably obtained starting from natural or vegetable fibers, or in filter paper. Alternatively, the filter element 36 can be made of metal fibers, or of plastic fibers.

The filter element 36 has dimensions length and width - substantially corresponding to those of the container section 2. Preferably the filter element 36 can have larger dimensions than the section of the outlet duct 4, so as to allow covering the duct itself, and in particular it can have dimensions equal to twice the section of the outlet duct.

The filter element 36 has a size greater than half of the section of the container 2, in order to allow adequate filtration of the aerosol 102.

The filter element 36 has a dimension less than twice the section of the container 2, in order to achieve effective aerosol filtration but at the same time to avoid excessive waste of space.

It is conveniently understood that, if the container 2 has an irregular and/or variable section, the filter element has dimensions between half and double the section of the container 2 in correspondence with the portion in which the filter element itself is positioned.

In a preferred embodiment, the filtering apparatus 34 comprises a movement assembly 38 configured to move said filter element 36 between a first operating position and a second rest position. Said first operating position is a position in which said filter element is located between the spraying chamber and the external environment, and is positioned in correspondence with the passage mainly traveled by the aerosol in order to exit the spraying chamber towards the external environment E. In said first operative position the filter element 36 is located in correspondence with the section of said outlet duct 4, in order to filter the aerosol 102 exiting said outlet duct 4. The second rest position is a position in which said filter element is not located between the spraying chamber and the external environment, and is not positioned in correspondence with the passage mainly crossed by the aerosol in order to exit the spraying chamber towards the external environment E. In said first operative position the filtering element 36 is in a first position in which it is available and/or reachable by a user for its replacement, and it is not in a position to filter the aerosol 102 exiting said outlet duct 4.

In a preferred embodiment, said second position can be along one of the sides of the container 2, and preferably it can be along a side perpendicular to the arrival side of the inlet duct 100. Advantageously, said second position can be at a height that can be easily reached by a user.

In substance, therefore, the movement assembly 38 can be configured to make the filter element 36 travel a first horizontal section, in order to remove it from said first operating position, and a second vertical section, in order to bring it to correspondence with said second rest position.

In a preferred embodiment the container 2 can comprise a suitable slot 39 configured to allow the passage of said filter element 36 between said first and said second position.

In one embodiment the filter element 36 can be associated, preferably in a reversible manner, to said movement assembly 38 by means of a support structure 37 which comprises a plurality of support elements 40 configured to associate said filter element 36 to said movement assembly 38. For example, said support elements can comprise a plurality of guides, or a plurality of gripping elements, for example a plurality of grippers, or a plurality of buttons. Conveniently, said support elements can in turn be associated with a frame (not shown) associated with said movement assembly.

Advantageously, the support structure 37 is integral with the filter element 36, and in particular can be moved by the movement assembly 38 between a first position in which the filter element 36 is in a position suitable for filtering the aerosol 102, and a second position in which the filter element 36 is in a position not suitable for filtering the aerosol 102. In particular, said second position can be a position in which the filter element 36 can be easily separated and/or re-associated with the support structure 37, in order to be replaced.

Advantageously, said support structure 37 is configured to associate said filter element 36 with movement means 42, consisting for example of a pair of conveyor belts or, preferably of a pair of chains 43, 43', which can be closed-loop, or open, for example, with winding at both ends. Said movement means 42 are configured to move said support elements 40, and therefore said filtering element 36, between said first and said second position. In one embodiment, said support elements 40 can be associated with said chains 43, 43'by means of suitable pins.

Advantageously, there may also be suitable transverse support elements 46, positioned between the two chains 43, 43', in order to support the filter element 36.

In an embodiment with said chains 43, 43', a closing element 48 of the slot 39, for example made of sheet metal, can be positioned in a more rearward position - ie closer to said second position with respect to said filter element, ie further upstream with respect to said filter element 36 in the displacement that goes from said second position at said first position -.

In one embodiment said chains 43, 43'are moved by at least one actuator 50. Conveniently the motion generated by said actuator 50 can be transmitted to the two chains 43, 43' by means of suitable transmission means. Advantageously, said actuator 50 can comprise an electric motor.

Advantageously, said actuator 50 can be connected to a suitable control and processing unit (not shown).

Advantageously, said chains 43, 43'are closed-loop, and are configured to be returned around a roller, preferably idle, positioned inside said container 2.

Furthermore, said chains can be supported by at least one suitable guide element positioned in correspondence and/or in proximity of the opening 39 or in any case at the intersection between the substantially vertical section crossed by the movement means 42, and the substantially horizontal section, in order to allow the two chains 43, 43'to perform the angle.

In one embodiment the guide element can be a cylinder, in order to allow the sliding of the filter element. Advantageously, the transverse guiding element can be Teflon-coated, or in any case coated with a non-stick material.

Advantageously, the guide element can provide at the ends a pair of toothed wheels configured to engage the links of the chains 43, 43'. Preferably, in this case, the transverse guiding element can have a diameter smaller than that of the toothed wheels so as to substantially not come into contact with the filtering element 36.

In a further embodiment, said at least one guiding element can only be shown by the pair of toothed wheels which in this case can be rotatably secured by suitable mechanical means to the outer wall of the container 2.

In one embodiment, said movement means 42 can be configured to move said support structure 37 and/or said filter element 36 from said first position, in which the filter element is in a position suitable for filtering the aerosol 102 exiting said container 2, to said second position, in which the filter element is in a position not suitable for filtering the aerosol 102 leaving said container 2, and to a third position, in which the filter element 36 is in a position, which preferably is different from said second position and is not suitable for filtering the aerosol 102 exiting said container 2. For example, said third position can be on a side that can be facing and/or angled with respect to that on which said second position is located.

Advantageously, said third position can be substantially symmetrical with respect to said second position and in particular it can be positioned at the same height as said second position. Advantageously, the distance that the filter element 36 must travel between said first position and said second position and vice versa can be equal to the distance that the filter element must travel between said first position and said third position and vice versa.

In one embodiment there may also be a further filter element 36', preferably associated with a further support structure 37'.

In an embodiment, said further filter element 36'can be connected to said movement assembly 38. Alternatively, said further filter element can be associated with a further movement assembly 38'.

Advantageously, said further filter element 36'can be substantially similar to said filter element 36.

Advantageously said further movement assembly 38' can be substantially similar to said movement assembly 38. Preferably said further movement assembly 38'can be configured to move said further filter element 36'between a further first position, in which the further filter element 36' is positioned in a position suitable for filtering the aerosol 102 exiting said container 2, a further second position, in which the further element filter 36'is positioned in a position not suitable for filtering the aerosol 102 exiting said container 2, and a third position, which is preferably different from said second position and in which the further filter element 36' is positioned in a position not suitable for filtering the aerosol 102 exiting said container 2.

Advantageously said further first position can face said first position, and preferably in a higher position than said first position. Alternatively, said further first position can be in a lower position than said first position. Advantageously, said further second position can correspond to and/or be placed side by side and/or facing said second position. Advantageously, said further third position can correspond to and/or be placed side by side and/or facing said third position.

In an embodiment, said further movement assembly 38'can be associated with said container on a face which substantially faces the surface on which said movement assembly 38 is positioned. In a further embodiment said further movement assembly 38' can be associated with said container on a surface which is substantially angled with respect to the surface on which said movement assembly 38 is positioned.

In one embodiment at the first position, and preferably just above said first position and/or said further first position a grid can be positioned, for example made of metal, configured to prevent the filter element 36 from bending upwards under the thrust of the aerosol flow 102.

In one embodiment, the abatement filter 1 comprises at least one sensor of pressure 58, and preferably at least one pair of pressure sensors pressure 58, 60 configured to measure the pressure along the aerosol path 102.

In particular, a first pressure sensor 58 can be positioned upstream of said filter element 36, while a second pressure sensor 60 can be positioned downstream of said filter element.

Preferably, both pressure sensors 58, 60 can be connected to the control and processing unit which controls the operation of the scrubber filter 1.

Advantageously, said control and processing unit can be configured to calculate the pressure variation upstream and downstream of said filter 34, in order to verify the proper functioning of the filter itself. Advantageously, moreover, said control and processing unit can be configured to calculate the derivative of the pressure variation over time.

Advantageously, said control and processing unit can be configured to send an alarm signal to a user if it detects a malfunction and/or detects saturation and/or clogging of the filter element 36. Advantageously, depending on the extent of the malfunction, they can be sent different signals.

The operation of the abatement filter 1 is clear from what has been said above.

In particular, the aerosol 102 coming from the spraying chamber is sucked by the suction device through the inlet duct 100, where it receives a first spray of water from the first nozzle 6.

Subsequently, the fan 10 directs it upwards.

The second nozzles 22 spray a further jet of water onto the aerosol, in order to remove a further fraction of liquid and/or solid suspension.

The water sprayed by the first nozzles 6 and/or the second nozzles 22 is collected in the basin 14, filtered by the filter 18 and conveyed by the pump 20 through the conduit 24 back to the first nozzles 6 and/or the second nozzles 22.

Thereafter the aerosol 102 can pass through the dry filter 26, releasing a further fraction of the liquid and/or solid suspension on the walls of said dry filter.

Subsequently, the aerosol 102 can enter the outlet channel 4 and pass through the filter element 36 in order to release a further fraction of liquid and/or solid suspension.

In particular, in this case the suspension is trapped in the cavities present in the filter element 36, which can gradually become saturated, until it no longer allows the passage of the aerosol 102.

Advantageously this can be detected by the control and processing unit on the basis of the pressure measurements carried out by sensors 58, 60.

If, for example, the pressure difference upstream and downstream of the filtering element is lower than a predefined value and/or selected by the user, the control and processing unit can be configured to send an alarm signal, informing that the filter element is clogged and requires maintenance or needs to be replaced.

Advantageously, if the variation in pressure difference measured by said pressure sensors 58, 60 is faster than a predetermined rate and/or selected by the user, the control and processing unit can be configured to send a different signal.

Advantageously, following the signal, the user can stop the operation of the production line and/or of the spraying chamber and/or of the abatement filter 1, and subsequently activate the movement assembly 38 in order to replace the filter element 36. In in particular, the actuator 50 which activates the movement means 42 can be activated. In particular, in this way the filter element 36 is removed from said first operating position and moved towards said second rest position.

Conveniently if the guide element comprises a transverse cylinder, said filter element 36 can be configured to rest on the cylinder itself during the passage from said horizontal section to said vertical section, thus depositing on the guide element a part of the suspension which had been filtered. Advantageously, if the guide element comprises a Teflon-coated cylinder, the deposited suspension may not stick and fall to the ground.

When the filter element 36 is in said second position, the user can easily remove it from the movement assembly by acting on the support elements 40. Alternatively, said support elements 40 can be connected to said control and processing unit in order to allow the their control in an automated way.

Subsequently, the user can reactivate the movement assembly 38 in order to move said filter element 36 from said second position to said first position.

Conveniently, when said filter element 36 is in said first position, the closing element 48 is located in correspondence with the slot 39 substantially closing it.

Subsequently, the user can reactivate the Abatement filter and/or the spray chamber and/or the production line.

Advantageously, after having been removed the filter element 36 can be washed in order to be reused.

Alternatively, in the embodiment in which the further filter element 36'is present, the movement assembly 38 is configured to move the filter element between said first, said second and said third position, and the operation is as follows.

When the filter element 36 which is in said first position is saturated, the further filter element 36'can be associated with the movement assembly in said second or said third position.

Subsequently, said movement assembly 38 can be operated in order to move said filter element 36 towards said third or said second position, and in particular towards the position in which said further filter element 36'has not been associated. Advantageously, this movement of the movement means 42 involves simultaneously the movement of said further filter element 36'from said second or said third position up to said first position. In this way, the time during which there is no filter element 36, 36'in said first position can be considerably reduced, and therefore the time during which the filtration of the aerosol 102 in output from the abatement filter 1 does not take place, and this allows to reduce the time during which it is necessary to stop the filtering booth.

In the embodiment in which the further filter element 36'and the further movement assembly 38' are present, the operation is as follows.

The further filter element 36'is associated with the further movement assembly, for example by means of the further support structure 37', in said further second or in said further third position, and preferably in said further third position. Subsequently, the further actuator is operated in order to move the further movement means 42'in order to transfer the further filter element 36' from said further second or said further third position to said further first position.

Subsequently, the movement assembly 38 is operated in order to move the filter element 36 from said first position to said second or to said third position. Subsequently, the filter element 36 can be detached and replaced.

Advantageously, in this way it is possible to completely eliminate the time in which there is no filter element 36, 36'upstream of said outlet duct 4, and therefore it is not necessary to stop the machine and/or the production line.

As it clearly appears from what has been said, the abatement filter according to the invention is particularly advantageous, indeed, optimal, since:
- it can easily be inserted in a production line, as it has reduced dimensions,
- allows you to replace the filter element quickly and easily,
- it allows the condition of the filtering element itself to be monitored in a substantially continuous manner.

## Claims

1. Abatement filter (1) to filter the aerosol (102) produced in a leather treatment and/or finishing chamber, said abatement filter (1) comprising a container (2), through which the aerosol (102) to be filtered is passed, said container (2) containing:
- at least one suction device (3,10) configured to suck the aerosol (102) generated in said leather treatment and/or finishing chamber,
- at least one liquid filter (5) configured to spray at least one water-based liquid on said aerosol (102) in order to at least partially precipitate the particulate present in suspension in the aerosol itself,
- a dry filtering apparatus (34) arranged downstream of said liquid filter (5) according to the direction of flow of said aerosol (102), comprising at least one laminar filter element (36),
**characterized in that** said at least one element filter (36) is movable, in a mechanized way, between a first operating position suitable for filtering said aerosol (102), wherein said first position is interfering with the path of said aerosol (102) through said container (2), and a second non operating position not suitable for filtering said aerosol (102), wherein said second position is not interfering with said path.

2. Abatement filter according to claim 1 **characterized by** the fact that said filtering element (36) has dimensions - that is length and width - ranging between half and double the section of said container (2) in correspondence with the portion in which said element filter (36) is positioned, when it is in its operating position.

3. Abatement filter according to one or more of the preceding claims **characterized in that** said filter element (36):
- in said first operating position, suitable for filtering said aerosol (102), is located in correspondence with the section of an outlet duct (4) of said container (2) to the external environment,
in said second non operating position, not suitable for filtering said aerosol (102), is not located in correspondence with the section of said outlet duct (4).

4. Abatement filter according to one or more of the preceding claims **characterized in that** it comprises at least one movement assembly (38) comprising:
- at least one, and preferably two, closed-loop chains (43, 43'), and/or
- at least one, and preferably two, open-loop chains (43, 43').

5. Abatement filter according to one or more of the preceding claims **characterized in that** it comprises a support structure (37) comprising a plurality of support elements (40) configured to reversibly associate said filter element (36) to said movement assembly (38).

6. Abatement filter according to one or more of claims 4 and 5 **characterized in that** said movement assembly (38) comprises an actuator (50) configured to actuate movement means (42), which move said filter element (36) between said first and said second position.

7. Abatement filter according to one or more of claims 4-6 **characterized in that** said container (2), inside which said filter element (36) is positioned when it is in said first position, comprises a slot (39), which it allows the passage of said filter element (36) from said first position to said second position or vice versa and which is blocked by a closing element (48), when said filter element (36) is in said first position.

8. Abatement filter according to one or more of claims 4 to 7 **characterized in that**
it comprises a further filter element (36') associated with said movement assembly (38), which is configured to move said filter element (36) and/or said further filter element (36') between said first position, said second position and a third position, which is different from said second position and in which said filter element (36) and/or said further filter element (36') is in an unsuitable position for filtering said aerosol (102).

9. Abatement filter according to claim 8 **characterized in that** it comprises a further movement assembly (38'), to which said further filter element (36') is associated, said further movement assembly being configured to move said filter element (36) between a further first position in which said further filter element (36') is in a suitable position to filter said aerosol (102) at the outlet from said container (2), and a further second or a further third position, in which said further filter element ( 36') is in an unsuitable position to filter said aerosol (102).

10. Abatement filter according to one or more of the preceding claims **characterized in that** it comprises:
- a first pressure sensor (58) positioned upstream of said filter element (36),
- a second pressure sensor (60) positioned downstream of said filter element (36),
- a control and processing unit, configured to measure the pressure difference upstream and downstream of said filter element (36).

11. Abatement filter according to one or more of the preceding claims **characterized in that** said filter element (36) is made of flexible filter material, for example of fabric, or of non woven fabric.

12. Abatement filter according to one or more of the preceding claims **characterized in that** said dry filtering apparatus (34) further comprises:
- a filter with filling bodies (28), comprising balls or complex objects with curved and/or flat surfaces contained in a casing (31), preferably made of plastic material with a rough surface, which trap solid particles that are in suspension in said aerosol (102) or
- at least one labyrinth filter (32) configured to pass said aerosol (102) through a plurality of narrow passages, in order to cause condensation of the liquid and/or solid suspension present in said aerosol on the walls of the passages of the filter (32) itself
and that said filter filling bodies (28) and said labyrinth filter (32) are located upstream of said filter element (36).

13. Line for the production of leathers comprising a leathers spraying chamber, **characterized in that** said leathers spraying chamber is fluidically connected to an abatment filter (1) according to one or more of the preceding claims.

14. Method for using an abatment filter (1) according to one or more of claims 1 to 12, which provides for the replacement and/or maintenance of said filter element (36) when the pressure upstream and/or the pressure downstream of the filtering element itself and/or the difference between said pressures and/or its variation over time satisfy pre-established conditions and/or values set by the user.

15. Method for using an abatment filter (1) according to claim 14 **characterized in that** said filter element (36) is washed and reused.

## Patentansprüche

1. Abluftfilter (1) zum Filtern des in einer Lederbehandlungs- und/oder - zurichtungskammer erzeugten Aerosols (102), wobei der Abluftfilter (1) einen Behälter (2) umfasst, durch den das zu filternde Aerosol (102) geleitet wird, wobei der Behälter (2) Folgendes enthält:
- mindestens eine Absaugvorrichtung (3, 10), die so konfiguriert ist, dass sie das in der Lederbehandlungs- und/oder zurichtungskammer erzeugte Aerosol (102) absaugt,
- mindestens einen Flüssigkeitsfilter (5), der so konfiguriert ist, dass er mindestens eine Flüssigkeit auf Wasserbasis auf das Aerosol (102) sprüht, um die im Aerosol selbst in Suspension befindlichen Partikel mindestens teilweise auszufällen,
- eine Trockenfiltervorrichtung (34), die stromabwärts des Flüssigkeitsfilters (5) entsprechend der Strömungsrichtung des Aerosols (102) angeordnet ist und mindestens ein laminares Filterelement (36) umfasst,
**dadurch gekennzeichnet, dass** das mindestens eine Filterelement (36) auf mechanisierte Weise zwischen einer ersten Betriebsposition, die zum Filtern des Aerosols (102) geeignet ist, wobei die erste Position den Weg des Aerosols (102) durch den Behälter (2) beeinträchtigt, und einer zweiten Nichtbetriebsposition, die nicht zum Filtern des Aerosols (102) geeignet ist, wobei die zweite Position den Weg nicht beeinträchtigt, beweglich ist.

2. Abluftfilter nach Anspruch 1, **dadurch gekennzeichnet, dass** das Filterelement (36) Abmessungen - d. h. Länge und Breite - aufweist, die zwischen der Hälfte und dem Doppelten des Querschnitts des Behälters (2) in Übereinstimmung mit dem Bereich liegen, in dem das Filterelement (36) angeordnet ist, wenn es sich in seiner Betriebsposition befindet.

3. Abluftfilter nach einem oder mehreren der vorstehenden Ansprüche, **dadurch gekennzeichnet, dass** das Filterelement (36):
- in der ersten Betriebsposition, die zum Filtern des Aerosols (102) geeignet ist, in Übereinstimmung mit dem Abschnitt eines Auslasskanals (4) des Behälters (2) in die äußere Umgebung angeordnet ist,
in der zweiten Nichtbetriebsstellung, die nicht zum Filtern des Aerosols (102) geeignet ist, nicht in Übereinstimmung mit dem Abschnitt des Auslasskanals (4) angeordnet ist.

4. Abluftfilter nach einem oder mehreren der vorstehenden Ansprüche, **dadurch gekennzeichnet, dass** er mindestens eine Bewegungsbaugruppe (38) umfasst, die Folgendes umfasst:
- mindestens eine, vorzugsweise zwei, geschlossene Ketten (43, 43') im geschlossenen Kreis, und/oder
- mindestens eine, vorzugsweise zwei Ketten im offenen Kreis (43, 43').

5. Abluftfilter nach einem oder mehreren der vorstehenden Ansprüche, **dadurch gekennzeichnet, dass** er eine Stützstruktur (37) umfasst, die eine Vielzahl von Stützelementen (40) umfasst, die so konfiguriert sind, dass sie das Filterelement (36) reversibel mit der Bewegungsbaugruppe (38) verbinden.

6. Abluftfilter nach einem oder mehreren der Ansprüche 4 und 5, **dadurch gekennzeichnet, dass** die Bewegungsbaugruppe (38) einen Aktor (50) umfasst, der so konfiguriert ist, dass er Bewegungsmittel (42) betätigt, die das Filterelement (36) zwischen der ersten und der zweiten Position bewegen.

7. Abluftfilter nach einem oder mehreren der Ansprüche 4 bis 6, **dadurch gekennzeichnet, dass** der Behälter (2), in dem das Filterelement (36) angeordnet ist, wenn es sich in der ersten Position befindet, einen Schlitz (39) umfasst, der den Durchgang des Filterelements (36) von der ersten Position in die zweite Position oder umgekehrt ermöglicht und der durch ein Verschlusselement (48) blockiert ist, wenn sich das Filterelement (36) in der ersten Position befindet.

8. Abluftfilter nach einem oder mehreren der Ansprüche 4 bis 7, **dadurch gekennzeichnet, dass** er ein weiteres Filterelement (36') umfasst, das mit der Bewegungsbaugruppe (38) verbunden ist, die so konfiguriert ist, dass sie das Filterelement (36) und/oder das weitere Filterelement (36') zwischen der ersten Position, der zweiten Position und einer dritten Position bewegt, die sich von der zweiten Position unterscheidet und in der sich das Filterelement (36) und/oder das weitere Filterelement (36') in einer ungeeigneten Position zum Filtern des Aerosols (102) befindet.

9. Abluftfilter nach Anspruch 8, **dadurch gekennzeichnet, dass** er eine weitere Bewegungsbaugruppe (38') umfasst, der das weitere Filterelement (36') zugeordnet ist, wobei die weitere Bewegungsbaugruppe so konfiguriert ist, dass sie das Filterelement (36) zwischen einer weiteren ersten Position, in der sich das weitere Filterelement (36') in einer geeigneten Position zum Filtern des Aerosols (102) am Auslass des Behälters (2) befindet, und einer weiteren zweiten oder einer weiteren dritten Position, in der sich das weitere Filterelement (36') in einer ungeeigneten Position zum Filtern des Aerosols (102) befindet, bewegt.

10. Abluftfilter nach einem oder mehreren der vorstehenden Ansprüche, **dadurch gekennzeichnet, dass** er Folgendes umfasst:
- einen ersten Drucksensor (58), der stromaufwärts des Filterelements (36) angeordnet ist,
- einen zweiten Drucksensor (60), der stromabwärts des Filterelements (36) angeordnet ist,
- eine Steuer- und Verarbeitungseinheit, die so konfiguriert ist, dass sie die Druckdifferenz stromaufwärts und stromabwärts des Filterelements (36) misst.

11. Abluftfilter nach einem oder mehreren der vorstehenden Ansprüche, **dadurch gekennzeichnet, dass** das Filterelement (36) aus flexiblem Filtermaterial, z. B. aus Gewebe oder aus Vliesstoff besteht.

12. Abluftfilter nach einem oder mehreren der vorstehenden Ansprüche, **dadurch gekennzeichnet, dass** die Trockenfiltervorrichtung (34) ferner Folgendes umfasst:
- einen Filter mit Füllkörpern (28), umfassend Kugeln oder komplexe Objekte mit gekrümmten und/oder flachen Oberflächen, die in einem Gehäuse (31) enthalten sind und vorzugsweise aus Kunststoffmaterial mit rauer Oberfläche bestehen, die feste Partikel abfangen, die in dem Aerosol (102) in Suspension sind, oder
- mindestens einen Labyrinthfilter (32), der so konfiguriert ist, dass er das Aerosol (102) durch eine Vielzahl von engen Durchgängen leitet, um die Kondensation der in dem Aerosol vorhandenen flüssigen und/oder festen Suspension an den Wänden der Durchgänge des Filters (32) selbst zu bewirken
und dass die Filterfüllkörper (28) und der Labyrinthfilter (32) stromaufwärts des Filterelements (36) angeordnet sind.

13. Anlage zur Herstellung von Leder, umfassend eine Ledersprühkammer, **dadurch gekennzeichnet, dass** die Ledersprühkammer mit einem Abluftfilter (1) nach einem oder mehreren der vorstehenden Ansprüche fluidisch verbunden ist.

14. Verfahren zur Verwendung eines Abluftfilters (1) nach einem oder mehreren der Ansprüche 1 bis 12, das den Austausch und/oder die Wartung des Filterelements (36) bereitstellt, wenn der Druck stromaufwärts und/oder der Druck stromabwärts des Filterelements selbst und/oder die Differenz zwischen den Drücken und/oder deren Veränderung im Laufe der Zeit vorher festgelegte Bedingungen und/oder vom Benutzer eingestellte Werte erfüllen.

15. Verfahren zur Verwendung eines Abluftfilters (1) nach Anspruch 14, **dadurch gekennzeichnet, dass** das Filterelement (36) gewaschen und wiederverwendet wird.

## Revendications

1. Filtre de réduction (1) pour filtrer l'aérosol (102) produit dans une chambre de traitement et/ou de finition du cuir, ledit filtre de réduction (1) comprenant un récipient (2) à travers lequel passe l'aérosol (102) à filtrer, ledit récipient (2) contenant :
- au moins un dispositif d'aspiration (3,10) configuré pour aspirer l'aérosol (102) généré dans ladite chambre de traitement et/ou de finition du cuir,
- au moins un filtre à liquide (5) configuré pour pulvériser au moins un liquide à base d'eau sur ledit aérosol (102) afin de précipiter au moins partiellement les particules présentes en suspension dans l'aérosol lui-même,
- un appareil de filtration à sec (34) disposé en aval dudit filtre à liquide (5) selon la direction d'écoulement dudit aérosol (102), comprenant au moins un élément filtrant (36) laminaire,
**caractérisé en ce que** ledit au moins un élément filtrant (36) est mobile, de manière mécanisée, entre une première position de fonctionnement adaptée pour filtrer ledit aérosol (102), ladite première position interférant avec le trajet dudit aérosol (102) à travers ledit récipient (2), et une deuxième position de non fonctionnement inadaptée pour filtrer ledit aérosol (102), ladite deuxième position n'interférant pas avec ledit trajet.

2. Filtre de réduction selon la revendication 1 **caractérisé par le fait que** ledit élément filtrant (36) a des dimensions - c'est-à-dire une longueur et une largeur - comprises entre la moitié et le double de la section dudit récipient (2) en correspondance de la partie dans laquelle ledit élément filtrant (36) est positionné, lorsqu'il est dans sa position de fonctionnement.

3. Filtre de réduction selon l'une ou plusieurs des revendications précédentes, **caractérisé en ce que** ledit élément filtrant (36) :
- dans ladite première position de fonctionnement, adaptée pour filtrer ledit aérosol (102), est situé en correspondance de la section d'un conduit de sortie (4) dudit récipient (2) vers l'environnement extérieur,
dans ladite deuxième position de non fonctionnement, inadaptée pour filtrer ledit aérosol (102), n'est pas situé en correspondance de la section dudit conduit de sortie (4).

4. Filtre de réduction selon l'une ou plusieurs des revendications précédentes **caractérisé en ce qu'**il comprend au moins un ensemble de déplacement (38) comprenant :
- au moins une, et de préférence, deux chaînes en boucle fermée (43, 43'), et/ou
- au moins une, et de préférence, deux chaînes en boucle ouverte (43, 43').

5. Filtre de réduction selon l'une ou plusieurs des revendications précédentes, **caractérisé en ce qu'**il comprend une structure de support (37) comprenant une pluralité d'éléments de support (40) configurés pour associer, de manière réversible, ledit élément filtrant (36) audit ensemble de déplacement (38).

6. Filtre de réduction selon l'une ou plusieurs des revendications 4 et 5, **caractérisé en ce que** ledit ensemble de déplacement (38) comprend un actionneur (50) configuré pour actionner les moyens de déplacement (42), qui déplacent ledit élément filtrant (36) entre ladite première et ladite deuxième position.

7. Filtre de réduction selon l'une ou plusieurs des revendications 4-6, **caractérisé en ce que** ledit récipient (2), à l'intérieur duquel est positionné ledit élément filtrant (36) lorsqu'il est dans ladite première position, comprend une fente (39), qui permet le passage dudit élément filtrant (36) de ladite première position à ladite deuxième position ou vice versa et qui est bloquée par un élément de fermeture (48), lorsque ledit élément filtrant (36) est dans ladite première position.

8. Filtre de réduction selon l'une ou plusieurs des revendications 4 à 7, **caractérisé en ce qu'**il comprend un élément filtrant (36') supplémentaire associé audit ensemble de déplacement (38), qui est configuré pour déplacer ledit élément filtrant (36) et/ou ledit élément filtrant (36') supplémentaire entre ladite première position, ladite deuxième position et une troisième position, qui est différente de ladite deuxième position et dans laquelle ledit élément filtrant (36) et/ou ledit élément filtrant (36') supplémentaire est dans une position inadaptée pour filtrer ledit aérosol (102).

9. Filtre de réduction selon la revendication 8, **caractérisé en ce qu'**il comprend un ensemble de déplacement (38') supplémentaire, auquel ledit élément filtrant (36') supplémentaire est associé, ledit ensemble de déplacement supplémentaire étant configuré pour déplacer ledit élément filtrant (36) entre une première position supplémentaire dans laquelle ledit élément filtrant (36') supplémentaire est dans une position adaptée pour filtrer ledit aérosol (102) à la sortie dudit récipient (2), et une deuxième position ou une troisième position supplémentaire, dans laquelle ledit élément filtrant (36') supplémentaire est dans une position inadaptée pour filtrer ledit aérosol (102).

10. Filtre de réduction selon l'une ou plusieurs des revendications précédentes, **caractérisé en ce qu'**il comprend :
- un premier capteur de pression (58) positionné en amont dudit élément filtrant (36),
- un second capteur de pression (60) positionné en aval dudit élément filtrant (36),
- une unité de commande et de traitement, configurée pour mesurer la différence de pression en amont et en aval dudit élément filtrant (36).

11. Filtre de réduction selon l'une ou plusieurs des revendications précédentes, **caractérisé en ce que** ledit élément filtrant (36) est constitué d'un matériau filtrant souple, par exemple en tissu, ou en tissu non tissé.

12. Filtre de réduction selon l'une ou plusieurs des revendications précédentes, **caractérisé en ce que** ledit appareil de filtration à sec (34) comprend en outre :
- un filtre doté de corps de remplissage (28), comprenant des billes ou des objets complexes à surfaces courbes et/ou plates contenus dans un boîtier (31), de préférence en matière plastique à surface rugueuse, qui piègent les particules solides en suspension dans ledit aérosol (102) ou
- au moins un filtre-labyrinthe (32) configuré pour faire passer ledit aérosol (102) à travers une pluralité de passages étroits, afin de provoquer la condensation de la suspension liquide et/ou solide présente dans ledit aérosol sur les parois des passages du filtre (32) lui-même
et que lesdits corps de remplissage (28) du filtre et ledit filtre-labyrinthe (32) sont situés en amont dudit élément filtrant (36).

13. Ligne de production de cuirs comprenant une chambre de pulvérisation de cuirs, **caractérisée en ce que** ladite chambre de pulvérisation de cuirs est en communication fluidique avec un filtre de réduction (1) selon l'une ou plusieurs des revendications précédentes.

14. Procédé d'utilisation d'un filtre de réduction (1) selon l'une ou plusieurs des revendications 1 à 12, qui prévoit le remplacement et/ou l'entretien dudit élément filtrant (36) lorsque la pression en amont et/ou la pression en aval de l'élément filtrant lui-même et/ou la différence entre lesdites pressions et/ou sa variation dans le temps satisfont à des conditions préétablies et/ou à des valeurs fixées par l'utilisateur.

15. Procédé d'utilisation d'un filtre de réduction (1) selon la revendication 14, **caractérisé en ce que** ledit élément filtrant (36) est lavé et réutilisé.
